Europäisches Patentamt

European Patent Office

Office européen des brevets

(19)

(11) EP 1 453 065 A1

(12) EUROPEAN PATENT APPLICATION

(43) Date of publication:
01.09.2004 Bulletin 2004/36

(51) Int Cl.⁷: G21K 4/00

(21) Application number: 04100671.9

(22) Date of filing: 20.02.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 26.02.2003 EP 03100471

(71) Applicant: AGFA-GEVAERT
2640 Mortsel (BE)

(72) Inventors:
• Van den Bergh, Rudy, c/o Agfa-Gevaert
2640, Mortsel (BE)
• Cabes, Tom, c/o Agfa-Gevaert
2640, Mortsel (BE)

(54) **A binderless storage phosphor screen having voids partially filled**

(57)    A binderless stimulable phosphor screen comprising a vapour deposited storage phosphor layer on a support and a protective layer wherein the vapour deposited phosphor is needle shaped with voids between the needles, wherein the voids are at least partially filled with polymeric compounds selected from the group consisting of silazane and siloxazane type polymeric compounds, mixtures thereof and mixtures of said silazane or siloxazane type polymeric compounds with compatible polymeric compounds.

EP 1 453 065 A1

**Description**

FIELD OF THE INVENTION

The present invention relates to a binderless storage phosphor screen with vapour deposited phosphors.

BACKGROUND OF THE INVENTION

A well known use of storage phosphors is in the production of X-ray images. In US-A 3,859,527 a method for producing X-ray images with a photostimulable phosphor, which are incorporated in a panel, is disclosed. The panel is exposed to an incident pattern-wise modulated X-ray beam and as a result thereof the phosphor temporarily stores energy contained in the X-ray radiation pattern. At some interval after the exposure, a beam of visible or infra-red light scans the panel in order to stimulate the release of stored energy as light that is detected and converted to sequential electrical signals which become processed in order to produce a visible image. For this purpose the phosphor should store as much as possible of the incident X-ray energy and emit as little as possible of the stored energy before being stimulated by the scanning beam, thus showing prompt emission after X-ray exposure to an extent as low as possible. This is called "digital radiography" or "computed radiography".

Since in the above described X-ray recording systems the X-ray conversion screens are used repeatedly, it is important to provide them with an adequate topcoat for protecting the phosphor containing layer from mechanical and chemical damage. This is particularly important for photostimulable radiographic screens where screens are often transported in a scanning module - wherein the stimulation of the stored energy takes place - while not being encased in a cassette but is used and handled as such without protective encasing.

The image quality that is produced by any radiographic system using phosphor screen thus also in a digital radiographic system, depends largely on the construction of the phosphor screen. Generally, the thinner a phosphor screen at a given amount of absorption of X-rays, the better the image quality will be. This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used in order to produce high quality screens with every arbitrary phosphor available. The mentioned production method leads to the best results when phosphor crystals with high crystal symmetry and simple chemical composition are used.

The use of alkali metal halide phosphors in storage screens or panels is well known in the art of storage phosphor radiology and the high crystal symmetry of these phosphors makes it possible to provide structured screens and binderless screens.

It has been disclosed that when binderless screens with an alkali halide phosphor are produced it is beneficial to have the phosphor crystal deposited as some kind of piles, needles, tiles, etc. to increase the image quality than can be obtained when using such a screen. In, e.g., US-A 4,769,549 it is disclosed that the image quality of a binderless phosphor screen can be improved when the phosphor layer has a block structure shaped in fine pillars. In e.g. US-A 5,055,681 a storage phosphor screen comprising an alkali halide phosphor in a pile-like structure is disclosed. Also in EP-A 1 113 458 a phosphor panel with a vapour deposited CsBr:Eu phosphor layer wherein the phosphor is present as fine needles separated by voids is disclosed for optimising the image quality.

Unfortunately such needle shaped phosphors are quite brittle and the phosphor panels are prone to physical damage after only a few cycles in the scanning apparatus. It has been proposed to strengthen the screens or panels by applying a protective layer on top of the vapour deposited phosphor layer. Such a protective overcoat has been described in EP-A 0 392 474. An intensifying screens having a very useful protective coating of a fluorine-resin and an ologomer, having a polysiloxane structure has been described in EP-A 0 579 016. Also the use of radiation curable coating to form a protective top layer in a X-ray conversion screen has been described e.g. in EP-A 0 209 358, in JP-A 86-176900 and in US-A 4,893,021. For example, the protective layer comprises a UV cured resin composition formed by monomers and/or prepolymers that are polymerised by free-radical polymerisation with the aid of a photoinitiator. The monomeric products are preferably solvents for the prepolymers used. Impregnating storage phosphor layers with a polymer material as, e.g., a thermosetting resin, has been disclosed in EP-A 0 288 038.

In EP-A 1 316 969, a binderless stimulable phosphor screen has been disclosed having a support and a vapour deposited phosphor layer and a protective layer on top of said phosphor layer, characterised in that said vapour deposited phosphor is needle shaped and said phosphor needles have a length, L and voids between them and wherein said protective layer fills said void for at most 0.10 times L. By doing so the strength of the panel is increased, as well as by adding polymeric compounds in order to partially fill the voids as described in EP-A 1 347 460. From other technological fields as e.g. production systems for ceramic products, it has e.g. been learnt that polysilazane-type polymers are advantageously used while these polymers are impregnating e.g. porous ceramics as has been disclosed in US-A 5,459,114; thereby increasing mechanical strength in ceramic products.

With respect to image quality it has been disclosed in US-A 4,947,046 that the voids between needle phosphors can be filled with colorants, dyes and/or pigments, thus enhancing the said image quality.

Although all screens disclosed in this prior art review can yield X-ray images with good quality, there is still a need for storage phosphor screens with a substantially increased physical strength that can withstand the wear and the tear of transporting.

OBJECTS AND SUMMARY OF THE INVENTION

It is an object of the invention to provide a binderless stimulable phosphor screen useful in an X-ray recording system with a strong protective layer, that can be transported easily through a scanning module without causing jamming and without being damaged.

The above mentioned object is realised by providing a stimulable phosphor screen prepared by the method having the specific features as defined in claim 1. Specific features for preferred embodiments of the invention are disclosed in the dependent claims.

Further advantages and embodiments of the present invention will become apparent from the following description.

DETAILED DESCRIPTION OF THE INVENTION

It has been found that in favour of resistance to wear while scanning, and resistance to jamming in a scanning module while transporting a storage phosphor screen or panel, a binderless stimulable phosphor screen comprising a vapour deposited storage phosphor layer on a support is advantageously provided with a protective layer wherein the vapour deposited needle-shaped phosphor is provided with voids between the needles, and wherein the voids are at least partially filled with polymeric compounds selected from the group consisting of silazane and siloxazane type polymeric compounds, mixtures thereof and mixtures of said silazane or siloxazane type polymeric compounds with compatible polymeric compounds. The said phosphor screen or panel is thereby offering a substantially increased physical strength with respect to ability to withstand wear and tear of transporting such a screen in a scanning apparatus as set forth.

Siloxazane polymer types suitable for use in the method of the present invention have been known since quite a lot of time: so e.g. in US-A 3,271,361 a process for making ordered siloxazane polymers has been described, whereas in GB-A 1,084,659 improvements in or related with organosilicon polymers have been disclosed. Much more recently PCT-filing WO87/05298 has been describing polysilazanes and related compositions, processes and uses. That invention also relates to the use of polysiloxazanes and polyhydridosiloxanes as ceramic precursors. The hardness, strength, structural stability under extreme environmental conditions of those compounds is said to be well-known. Controll of the polysilazane molecular weight, structural composition and viscoelastic properties play a considerable role in determining the tractability (solubility, meltability or malleability) of the polymer, the ceramic yield, and the selectivity for specific ceramic products. In particular, the tractability plays a major role in how useful the polymer is as a binder, or for forming shapes, coatings, spinning fibers and the like. The more cross-linked a polymer is, the less control one has of its viscoelastic properties. Thus, highly cross-linked and low molecular weight polymers are not particularly useful for spinning fibers because the spun preceramic fiber often lacks tensile strength and is therefore unable to support its own weight. By contrast, high molecular weight, substantially linear polymers as provided therein are extremely important. Such polymers represent a significant advance in the art, as they provide chain entanglement interactions in the fiber-spinning process and thus enhance the overall tensile strength of the spun fibers. "Silazanes" are compounds which contain one or more silicon-nitrogen bonds, whereas "polysilazanes" are intended to include oligomeric and polymeric silazanes, i.e. compounds which include two or more monomeric silazane units. "Siloxazanes" are compounds which contain the unit [O--Si--N] and the term "polysiloxazane" is intended to include oligomeric and polymeric siloxazanes, i.e. compounds which include two or more monomeric siloxazane units. Ceramic materials are thus provided as being useful in a number of applications, including as coatings for many different kinds of substrates. Silicon nitride and silicon oxynitride coatings may be provided on a substrate, for example, by a variation of the pyrolysis method just described. A substrate selected such that it will withstand the high temperatures of pyrolysis (e.g., metal, glass, ceramic, fibers, graphite) is coated with a preceramic polymer material by dipping in a selected silazane or siloxazane polymer solution, or by painting, spraying, or the like, with such polymer solution, the solution having a predetermined concentration, preferably between about 0.1 and 100 wt. %, more preferably between about 5 and 10 wt. % for most applications. The liquid or dissolved polymer may be admixed with ceramic powders such as silicon nitride or silicon carbide optionally admixed with sintering aids such as aluminum oxide, silica, yttrium oxide, and the like, prior to coating. Crosslinking agents may be included in the coating mixture as well, as e.g. siloxane oligomers or polymers such as $[CH_3SiHO]_x$ can be reacted with ammonia or amine to introduce nitrogen moieties into these species.

These reactions may lead to the formation of a nitrogen cross-linked polymer having a homogeneous distribution of Si--O and Si--N bonds in the polymer. The siloxazane so provided may be pyrolysed under an inert gas such as nitrogen or argon, or under ammonia or a gaseous amine compound, to yield ceramic mixtures containing silicon oxynitride. Alternatively, nitrogen-free siloxane starting materials which may be oligomeric or polymeric are pyrolyzed under ammonia or a gaseous amine atmosphere to give silicon oxynitride directly. In this case, the nitrogen is introduced into the siloxane during rather than prior to pyrolysis. The siloxane may be a sesquisiloxane, a polyhydridosiloxane, a cross-linked polysiloxane or a polysiloxane with latent reactive groups such as hydrogen amine, alkoxy, sulfide, alkenyl, alkynyl, etc., which can be cross-linked during heating or replaced during curing. The procedure described in that WO for producing coatings containing silicon nitride can be done with a conventional furnace. Further, the method leads to heat-stable, wear-, erosion-, abrasion, and corrosion-resistant silicon nitride ceramic coatings. Because silicon nitride is an extremely hard, durable material, many applications of the coating process are possible. Preceramic polymers as provided, admixed with ceramic powders, may be used to form three-dimensional articles by injection- or compression-molding. Preceramic polymer/ceramic powder system is advantageously used to form three-dimensional bodies by compression molding.

In another application substantially linear high molecular polysilazanes in particular, can be used for preceramic fiber spinning. Infiltration and impregnation processes are further possibilities, as discussed, e.g., in US-A 4,177,230 and in W.S. Coblenz et al. in "Emergent Process Methods for High-Technology Ceramics", Ed. Davis et al. (Plenum Publishing, 1984). Two general methods are typically used. One is a high-vacuum technique in which a porous ceramic body is contacted under vacuum with a liquid or dissolved preceramic polymer. After a high vacuum infiltration, the article may be pyrolyzed in order to achieve a higher density. The second method is high-pressure infiltration. Either of these methods can in principle be adapted for the polymers of the invention. In addition, low molecular weight oligosilazane solutions having higher mobility in the porous ceramic body can be incubated with the ceramic body and a transition metal catalyst, followed by curing of the oligomeric reactants. In situ chain extension or cross-linking will reduce the mobility and volatility of the oligomeric starting materials.

As has been set forth in US-A 5,459,114 polysilazane, prepared therein like for example, an inorganic polysilazane, an inorganic polysiloxazane, a polyorgano(hydro)silazane, a modified polysilazane or a polymetallosilazane, by performing chemical vapour deposition (CVD) coating before or after said process of impregnation, curing and firing, makes delamination of fibers to be minimized.

Novel polysiloxazanes comprising $[(SiH_2)_n NH]$ and $[(SiH_2)_m O]$ as the main repeating units are provided in US-A 4,869,858, wherein it was an object to provide a simple process for producing continuous silicon oxynitride fibers. The polysiloxazanes are produced by reacting a dihalosilane or an adduct thereof with a Lewis base, with ammonia and water vapor or oxygen. From the polysiloxazane, novel silicon oxynitride shapes can be produced and the silicon oxynitride shapes are essentially composed of silicon, nitride (5 mol % or more) and oxygen (5 mol % or more).

More recently in US-A 6,210,786 a fiber-reinforced ceramic matrix composite (FRCMC) structure having tailored physical properties has been provided, with a polymer-derived ceramic resin in its ceramic form and with fibers in a sufficient quantity incorporated within the ceramic resin, in order to produce a desired degree of ductility exhibited by the structure, wherein the degree of ductility exhibited varies with the percentage by volume of the fibers, with said fibers having thereon an interface coating different from the composite and residing on the fibers between the fibers and the composite.

As has been disclosed even more recently in US-A 6,368,663 there is provided a ceramic-based composite member comprising a dense matrix formed on a surface of a shaped fabric, and a matrix having fine cracks formed in a gap of the matrix. In the structure, since the binding force of the ceramic fiber by the matrix having fine cracks is weak, a kind of soft structure is formed, Young's modulus is lowered, the thermal stress is reduced, and the resistance to thermal shock is enhanced. Moreover, according to that invention, there is provided a method of manufacturing a ceramic-based composite member, in which after CVI (Chemical Vapour Infiltration) treatment is performed to form an SiC matrix on a surface of a shaped fabric, PIP (Polymer Impregnation and Pyrolysis) treatment is performed to infiltrate a gap of the dense matrix with an organic silicon polymer as a base before performing pyrolysis. The method of that invention is a process (hereinafter referred to as the hybrid treatment) constituted by combining CVI and PIP treatments, a dense matrix is formed around a ceramic fiber by CVI treatment, and the gap is infiltrated/filled with the matrix by the PIP treatment. Additionally, the matrix formed by the hybrid treatment is called the hybrid matrix. The PIP (Polymer Impregnation and Pyrolysis) treatment has a faster matrix forming rate as compared with CVI treatment, and can repeatedly be performed in a short time. Therefore, by repeating the PIP treatment, the gap after the CVI treatment is filled well, and the hermetic properties can be enhanced.

Providing a carbon/carbon composite comprising crystalline silicon carbide which is essentially uniformly distributed on both internal and external surfaces of the composite in a low concentration, as well as a process for producing the composite and the use of the composite has been described in US-A 6,376,431; wherein it has been discovered that small amounts of crystalline silicon carbide uniformly distributed throughout the carbon/carbon composite results in reduced wear with either no change or a slight increase in the friction coefficient.

By "vapour deposited phosphor" it is further, throughout this text, meant: a phosphor that is deposited on a substrate by any method selected from the group consisting of thermal vapour deposition, chemical vapour deposition, electron beam deposition, radio frequency deposition and pulsed laser deposition. This vapour deposition is preferably carried out under conditions as described in EP-A-1 113 458.

When vapour deposited phosphor layers contain phosphor needles separated by voids as disclosed in, e.g., the above mentioned EP-A-1 113 458, the phosphor layer is, as said above, quite sensitive for mechanical impact. It has been found now that the voids between the needles are easily filled with a particular polymeric type compound, being a silazane or siloxazane type polymeric compound and that, when the voids are partially filled with that particular silazane or siloxazane type polymeric compound, the mechanical strength of the phosphor layer is greatly enhanced and a phosphor screen with good sharpness associated with the needle shape of the phosphor and the good mechanical properties associated with phosphor layers containing phosphor particles in a binder are both realised in the same panel. Preferably, the voids are filled over a length of at least 5 μm; more preferably, the voids are filled over a length of at least 10 μm and even most preferably, the voids are filled over a length of 15 μm.

As compatible polymers suitable for use in mixtures with the above-mentioned polymeric compounds selected from the group consisting of silazane and siloxazane type polymeric compounds, mixtures thereof, in order to fill voids at least partially as disclosed above, any polymer or polymer mixture known as a binder in the art of making phosphor panels can be used. Polymers suitable for use in a phosphor panel of this invention preferably selected from the group consisting of vinyl resins, polyesters and polyurethane resins. A first preferred class of polymers to be used as binders are the vinyl resins. According to the Whittington's dictionary of plastics this class includes all resins and polymers made from monomers containing the vinyl group $CH_2=CH-$. Examples of such ethylenic monomers include acrylates, methacrylates, vinyl esters, olefins, styrenes, crotonic acid esters, itaconic acid diesters, maleic acid diesters, fumaric acid diesters, acrylamides, acryl compounds, vinyl ethers, vinyl ketones, vinyl heterocyclic compounds, glycidyl esters, unsaturated nitriles, polyfunctional monomers, and various unsaturated acids. A further class of useful polymers are polyesters with Tg ≤ 0. This class comprises all polymers in which the main polymer backbones are formed by the esterification condensation of polyfunctional alcohols and acids. Also hydrogenated styrene-diene block copolymers, having a saturated rubber block, as rubbery and/or elastomeric polymers can be for filling the voids in a binderless phosphor panel of this invention.. The elastomeric polymer can be represented by the formula A-B-A (tri-block) or by the formula A-B (di-block), wherein A represents styrene and B represents the hydrogenated diene block e.g. ethylenebutylene or ethylene-propylene. Also polyurethane resins can be used as additional polymer in mixtures of polymeric compounds in the voids of the storage phosphor layers of panels according to the present invention.

The selected silazane or siloxazane type polymeric compounds, mixtures thereof and mixtures with compatible polymeric compounds, wherein it is understood that the silazane or siloxazane type polymeric compounds are preferably present in an excess (at least 1:1 up to 10:1) versus the so-called compatible polymeric compounds if present, can be dissolved in any suitable solvent, e.g., alcohols such as methanol, ethanol, n-propanol, methoxypropanol and n-butanol; chlorinated hydrocarbons such as methylene chloride and ethylene chloride; ketones such as acetone, butanone, methyl ethyl ketone, diethyl ketone and methyl isobutyl ketone; esters of alcohols with aliphatic acids such as methyl acetate, ethyl acetate and butyl acetate; ethers such as dioxane, ethylene glycol monoethylether; methyl glycol; aromatic hydrocarbons such as toluene and mixtures of the above-mentioned solvents.

When the phosphor screen comprises a vapour deposited CsBr:Eu needle phosphor it is preferred to use polymers that do not carry hydrophilic, moisture attracting substituents. The selected silazane or siloxazane type polymeric compounds, mixtures thereof and mixtures with compatible polymeric compounds for use in phosphor screen with a vapour deposited CsBr:Eu needle phosphor are preferably dissolved in a solvent that can easily be kept water free, wherein by water free is understood a solvent that has less than 1 % wt/wt of water. So a solution of vinyl resins, more specifically vinyl resins comprising moieties derived from (meth)acrylic acid and/or esters of (meth)acrylic acid in ethylacetate is a first preferred solution to bring a polymer in the voids between the needle shaped phosphor in a vapour deposited phosphor panel of this invention. A further preferred solution to bring a polymer in the voids between the needle shaped phosphor in a vapour deposited phosphor panel of this invention is a solution of a thermoplastic rubber, this rubber is preferably a block-copolymeric KRATON-G rubbers, KRATON being a trade mark name from SHELL. KRATON-G thermoplastic rubber polymers are a unique class of rubbers designed for use without vulcanisation in a mixture of ethyl acetate and toluene.

To summarise: said solution of compatible polymeric compounds used in mixtures with said silazane or siloxazane type polymeric compounds as in the method of the present invention is selected from the group consisting of vinyl resins comprising moieties derived from esters of acrylic acid in ethylacetate, vinyl resins comprising moieties derived from esters of methacrylic acid in ethylacetate, a thermoplastic rubber in a mixture of ethylacetate and toluene, and moreover urethanes or urethaneacrylates in ketones, melamine-resins in a mixture of ketones and ethylacetate, and diamine-hardened or isocyanate-hardened elastomers in ketones.

Bringing selected silazane or siloxazane type polymeric compounds, mixtures thereof or mixtures with compatible polymeric compounds in the voids between the needle phosphors in a vapour deposited phosphor screen of the present invention, advantageously proceeds by applying a protective layer on top of the phosphor layer from a solution having a viscosity in order to provoke seeping of the coating solution of the protective layer into the voids between the phosphor needles. In one production step (partial) filling of the voids and production of the protective layer thus proceed simultaneously. When it is desired to apply a radiation curable protective layer, then is preferred that the viscosity of the coating solution is adapted so that, with phosphor needles having a length, L , said protective layer fills said void for at most 0.10 times L or 10 % of L. When the voids are filled deeper with such a radiation curable protective layer, ease of recycling the phosphor is questionable. It has been found now that by adjusting the viscosity of the protective layer so that, with phosphor needles having a length, L, said protective layer fills said void for at most 0.10 times L, most acceptable compromise between strength of the surface and ease of recycling or recuperation of the phosphor is achievable.

Although the image quality that can be obtained in computed radiography when using a stimulable phosphor panel of the present invention having needle shaped phosphor is very high, it has been found that the image quality is further enhanced when the voids between the phosphor needles moreover contain a colorant, i.a., a dye or pigment that absorbs light of the stimulating wavelength. A further improvement has been realised when the voids are containing a colorant absorbing the stimulating radiation together with a colorant reflecting the light emitted by the stimulable phosphor upon stimulation. When a doped alkali halide metal phosphor is used as in the panel according to the present invention, then the stimulating light is either red or infrared light and then the colorant is preferably a blue colorant. As the colorant, either an organic colorant or an inorganic colorant can be employed. So an organic colorant having a body colour ranging from blue to green suitable for use in the radiation image storage panel of the present invention includes ZAPON FAST BLUE 3G (manufactured by Hoechst AG.), ESTROL BRILL BLUE N-3RL (manufactured by Sumitomo Kagaku Co., Ltd.), SUMIACRYL BLUE F-GSL (manufactured by Sumitomo Kagaku Co., Ltd.), D & C BLUE No. 1 (manufactured by National Aniline Co., Ltd.), SPIRIT BLUE (manufactured by Hodogaya Kagaku Co., Ltd.), OIL BLUE No. 603 (manufactured by Orient Co., Ltd.), KITON BLUE A (manufactured by Ciba Geigy AG.), AIZEN CATHILON BLUE GLH (manufactured by Hodogaya Kagaku Co., Ltd.), LAKE BLUE A.F.H. (manufactured by Kyowa Sangyo Co., Ltd.), RODALIN BLUE 6GX (manufactured by Kyowa Sangyo Co., Ltd.), PRIMOCYANINE 6GX (manufactured by Inahata Sangyo Co., Ltd.), BRILLACID GREEN 6BH (manufactured by Hodogaya Kagaku Co., Ltd.), CYANINE BLUE BNRS (manufactured by Toyo Ink Co., Ltd.), LIONOL BLUE SL (manufactured by Toyo Ink Co., Ltd.), and the like. E.g., an inorganic colorant having a body colour ranging from blue to green which is advantageously employed when the radiation image storage panel of the present invention includes ultramarine blue, cobalt blue, cerulean blue. Other useful colorants are the blue colorants sold by BASF AG of Germany under the trade name HELIOGEN BLUE and those sold by Bayer AG of Germany under trade name MACROLEX BLUE.

The colorant, contained in the voids of a panel of the present invention, intended for reflecting the emitted light, preferably is a white pigment. Very suitable white pigments are, e.g., $TiO_2$, $ZnS$, $Al_2O_3$, $MgO$, and $BaSO_4$, without however being limited thereto. $TiO_2$ in its anatase crystal form is a preferred white pigment for use in a panel of the present invention.

The colorant(s) can be brought in the voids either before adding the selected silazane or siloxazane type polymeric compound, as described hereinbefore, or together with the said selected silazane or siloxazane type polymeric compounds. When the colorant is brought into the voids before the polymeric compound, then the compound can be introduced into the fine gaps whose width is preferably 1-30 μm. The substance of fine particles having a diameter of several hundred nanometers may be introduced physically without previous processing. When the substance has a lower melting point, it may be heated and introduced. The substance may be permeated into the gap when dissolved or dispersed in a liquid having suitable viscosity and is deposited by evaporation or modification by heating. The substance may be introduced into the gap by a gas phase deposition method. In the latter case a suitable pigment can be a dye as used in thermal dye sublimation transfer. Typical and specific examples of dyes for use in thermal dye sublimation transfer have been described e.g. in EP-A's 0 209 990, 0 209 991, 0 216 483, 0 218 397, 0 227 095, 0 227 096, 0 229 374, 0 235 939, 0 247 737, 0 257 577, 0 257 580, 0 258 856, 0 400 706, 0 279 330, 0 279 467 and 0 285 665, 0 4 743 582, US-A-4 753 922, US-A-4 753 923, US-A-4 757 046, in US-A's 4,769,360; 4,771,035 and 5,026,677; in JP-A's 84/78894, 84/78895, 84/78896, 84/227490, 84/227948, 85/27594, 85/30391, 85/229787, 85/229789, 85/229790, 85/229791, 85/229792, 85/229793, 85/229795, 86/41596, 86/268493, 86/268494, 86/268495 and JP-A-86/284 489. When the colorants are not introduced by gas phase deposition in the voids between the phosphor needles, then colorants can, for application in the voids of a phosphor panel of the present invention, be dissolved or dispersed in any suitable solvent. Hereinafter the term "solution(s) of a colorant" is used to include both solution and dispersions. Examples of suitable solvents are, e.g., alcohols such as methanol, ethanol, n-propanol, methoxypropanol and n-butanol; chlorinated hydrocarbons such as methylene chloride and ethylene chloride; ketones such as acetone, butanone, methyl ethyl ketone, diethyl ketone and methyl isobutyl ketone; esters of lower alcohols with lower aliphatic acids such as methyl acetate, ethyl acetate and butyl acetate; ethers such as dioxane, ethylene glycol monoethylether; methyl glycol; aromatic hydrocarbons such as toluene and mixtures of the above-mentioned solvents. When the phosphor screen comprises a vapour deposited CsBr:Eu needle phosphor it is preferred to use solvents that can easily be kept water free as already suggested hereinbefore. The expression "water free" means that a solvent that less than 1 % wt/wt of water. Therefore esters of lower alcohols with lower aliphatic acids such as methyl acetate, ethyl acetate and butyl acetate and toluene are preferred solvents.

When the colorants are dispersed in the solution it is preferred that the average particle size of the colorant is adapted to the width of the voids. It is known from e.g. US-A 4,947,046, that the voids between phosphor needles are between 0.01 and 30 $\mu$m.

In a preferred embodiment of the present invention, the polymeric solution for filling the voids further contains one or more colorant(s) so that in one step both the elasticity of the screen and the image quality can be increased by adding simultaneously a polymer and at least one colorant in the voids.

The present invention thus provides a method for producing a binderless phosphor screen comprising the steps of :

- depositing a photostimulable phosphor on a substrate forming a phosphor layer with phosphor needles and voids between them,
- applying a solution of polymeric compounds selected from the group consisting of silazane and siloxazane type polymeric compounds, mixtures thereof and mixtures of said silazane or siloxazane type polymeric compounds with compatible polymeric compounds, on said vapour deposited phosphor as a surface layer,
- optionally wiping the excess of said solution from said phosphor layer and
- drying said phosphor screen.

The optional step of wiping the excess is only provided if really required, but in particular cases it is not required as e.g. in the case of dip-coating, spray-coating, bar-coating and sieve coating.

In a preferred embodiment according to the method of the present invention said photostimulable phosphor is a CsX:Eu stimulable phosphor, X being selected from the group consisting of Cl, Br and combinations thereof, deposited from a heatable container with said CsX:Eu phosphor, together with the substrate in a deposition chamber that is evacuated to at least $10^{-1}$ mbar.

In the preparation method for producing a binderless phosphor screen on a substrate containing a CsX:Eu stimulable phosphor, wherein X represents a halide selected from the group consisting of Br, Cl and combinations thereof, it is preferred to start the deposition process after bringing multiple heatable containers of CsX and a Europium compound selected from the group consisting of $EuX'_2$ $EuX'_3$ and $EuOX'$, X' being selected from the group consisting of F, Cl, Br, I and combinations thereof, together with the substrate in a deposition chamber that is evacuated to at least $10^{-1}$ mbar.

Further according to the method of the present invention said step of depositing proceeds by a method selected from the group consisting of physical vapour deposition, chemical vapour deposition or atomisation technique, thereby forming a vapour deposited phosphor layer with needle-shaped phosphor crystals.

According to the method of the present invention, an additional step of applying at least one colorant in said voids is performed before said step of applying a solution of the said polymeric compounds.

Further according to the method of the present invention, in said step of applying a solution of the said polymeric compounds on said vapour deposited phosphor, a solution of a polymer is used further comprising at least one colorant. In a preferred embodiment thereof, in the method of the present invention, an additional step of applying at least one colorant in said voids is performed before said step of applying a solution of the said polymeric compounds on said vapour deposited phosphor.

According to the method of the present invention said solution of compatible polymeric compounds is selected from the group consisting of vinyl resins comprising moieties derived from esters of acrylic acid in ethylacetate, vinyl resins comprising moieties derived from esters of methacrylic acid in ethylacetate, a thermoplastic rubber in a mixture of ethylacetate and toluene, urethanes or urethaneacrylates in ketones, melamine-resins in a mixture of ketones and ethylacetate, and diamine-hardened or isocyanate-hardened elastomers in ketones.

Furtheron according to the method of the present invention, said voids are filled over a length of at least 5 $\mu$m.

Last but not least, the method according to the present invention provides a mass loss of said surface layer of not more than 3 mg when measured after 100 cycles, when Taber abrasion tests are applied to a surface layer of said binderless phosphor screen, by making use of a Teledyne Taber 5130 Abraser and with Calibrase CS10F elements, sandpaper P220 and a load of 250 g on each element as described in ASTM D1044.

In a preferred embodiment method of the present invention provides a phosphor screen comprising a binderless phosphor layer of needle-shaped CsBr:Eu crystals.

The methods described above, in one embodiment, thus beneficially comprise an additional step of providing at least one colorant to the voids before the step of applying a solution of a silazane or siloxazane type polymeric compound on said vapour deposited phosphor. In a specific embodiment said additional step is a step of vapour depositing a colorant in the voids of the phosphor panel. In this additional step, the colorant can be either a colorant absorbing the stimulating radiation or a colorant reflecting the light emitted by the stimulable phosphor upon stimulation or it can be both.

In the methods as described above, more particularly in the step of applying a solution of a silazane or siloxazane type polymeric compound on said vapour deposited phosphor, a solution of a polymer that further contains at least one colorant may advantageously be added. In a preferred embodiment said solution even contains at least two colorants, one absorbing the stimulating radiation and one reflecting the light emitted by the stimulable phosphor upon stimulation.

When the voids between the phosphor needles have been filled with a solution of a silazane or siloxazane type polymeric compound (that is not intended to produce simultaneously a protective layer, although it is not excluded), then a protective layer may be applied to the panel. This layer can be any protective layer known in the art, it can be a radiation cured layer as disclosed in, e.g., US-A 6,120,902, and EP-A 1 316 970, wherein the radiation curable composition contains at least 1 mole % of fluorinated moieties.

If desired or effectively required, the protective layer of the present invention can include spacing particles for further increasing the transportability and adjusting the electrostatic properties. Suitable spacing agents in the form of friction reducing polymer beads are selected from the group consisting of solid polystyrene, solid polyalkylene and solid organic fluorinated polymers. Preferably the spacing agents are beads incorporating fluorinated moieties. Such beads have been described in US-A 4,059,768. Constructions of scanning apparatuses for reading out storage phosphor screens tends to become more and more compact, so that the distance between the (moving) storage phosphor screen and mechanical (moving) parts of the scanner may become very low as e.g. in the range from 10 to 100 $\mu$m. When a storage phosphor screen with a protective layer according to the present invention has protruding beads it is important that the beads do not touch mechanical parts of the scanner, even when the storage panel shows some wobble during transport in the scanner. Therefore beads used as spacing particles in a storage phosphor screen of the present invention preferably have a volume median diameter, $d_{v50}$, so that 5 $\mu$m $\leq d_{v50} \leq$ 25 $\mu$m and a numeric median diameter, dn50, so that $1 \leq d_{v50}/d_{n50} \leq 1.20$. Further the beads are preferably adapted to the thickness, t, of the protective layer on the storage panel of the present invention so that said polymeric beads have a volume median diameter, $d_{v50}$, so that $1.25 \leq d_{v50}/t \leq 4.0$.

The phosphor layer of a binderless storage phosphor screen according to the present invention can be prepared by vacuum deposition of the storage phosphor crystals on the substrate as well as by combining (mixing) the ingredients for the storage phosphor (phosphor precursors) and then evaporating this mixture in order to have the phosphor formed in situ during evaporation.

The storage phosphor in a binderless storage phosphor screen according to the present invention may be any storage phosphor known in the art. Preferably the storage phosphor in a binderless storage phosphor screen of this invention is an alkali metal phosphor. Suitable phosphors are, e.g., phosphors according to formula I :

$$M^{1+}X.aM^{2+}X'_2bM^{3+}X''_3:cZ$$

wherein: $M^{1+}$ is at least one member selected from the group consisting of Li, Na, K, Cs and Rb,
$M^{2+}$ is at least one member selected from the group consisting of Be, Mg, Ca, Sr, Ba, Zn, Cd, Cu, Pb and Ni,
$M^{3+}$ is at least one member selected from the group consisting of Sc, Y, La, Ce, Pr, Nd, Pm, Sm, Eu, Gd, Tb, Dy, Ho, Er, Tm, Yb, Lu, Al, Bi, In and Ga,
Z is at least one member selected from the group $Ga^{1+}$, $Ge^{2+}$, $Sn^{2+}$, $Sb^{3+}$ and $As^{3+}$,
X, X' and X'' can be the same or different and each represents a halogen atom selected from the group consisting of F, Br, Cl, I and $0 \leq a \leq 1$, $0 \leq b \leq 1$ and $0 < c \leq 0.2$.

Such phosphors have been disclosed in, e.g., US-A 5,736,069. Highly preferred storage phosphors for use in a binderless phosphor screen of the present invention are CsX:Eu stimulable phosphors, wherein X represents a halide selected from the group consisting of Br and Cl or a combination thereof, prepared by a method comprising the steps of

- mixing said CsX with between $10^{-3}$ and 5 mol % of a Europium compound selected from the group consisting of $EuX'_2$, $EuX'_3$ and EuOX', X' being a member selected from the group consisting of F, Cl, Br and I,
- firing said mixture at a temperature above 450 °C
- cooling said mixture and
- recovering the CsX:Eu phosphor.

EXAMPLES

Preparation of the phosphor screens

CsBr:Eu phosphor screen layers were coated by thermal vapour deposition of CsBr and EuOBr.
Therefore CsBr was mixed with EuOBr and placed in a container in a vacuum deposition chamber. The phosphor was deposited on an aluminum substrate having a thickness of 1.5 mm and a circular diameter of 40 mm.
The distance between the container and the substrate was 10 cm. During vapour deposition the substrate was rotated at a velocity of 12 r.p.m..
Before starting evaporation, the chamber was evacuated to a pressure of $4.10^{-5}$ mbar. During the evaporation process Ar was introduced as an inert gas in the chamber.
Several screens were produced in order to provide a test material suitable for tests with several differing protective coating application techniques.
Combined sil(ox)azane - urethaneacrylate solutions in ketones or THF and with addition of methoxypropanol as layer spreading agent were applied onto the phosphor layer (without a parylene coating) in order to fill the voids between the phosphor needles. The monomeric solution was made in a concentration range of 1 to 20 % by weight. Penetration of the solution was clearly better in case of

     a) lower monomeric concentrations
     b) ketones with a higher boiling point (e.g. DiEK and MIBK)
     c) a larger sil(ox)azane / urethaneacrylate - ratio
     d) basicly a lower solution viscosity.

Curing of the voids was carried out by atmospheric moisture or temperature increase.
Curing temperatures were varying in the range from room temperature up to 200°C, as required with respect to the monomeric ratio and the sil(ox)azane type. Curing was already going on during the penetration process.
The sil(ox)azane - urethane acrylate ratio was the preferred 1:1 for an optimised curing of the urethaneacrylate-part of the polymeric matrix (but could, in principle, vary up to 100 wt% sil (ox) azane).
A siloxazane - urethane acrylate 1/1 mixture was made, where the urethane acrylate was a mixture of 50 wt% ethyleneglycol dimethacrylate and 50 wt% of a hexafunctional oligomer, diluted to a 15 wt% solution with a solvent mixture of 80% methyl ethylketone and 20% isobutyl methyl ketone. TBPEHC (tert. butylperoxy-2-ethylhexyl-carbonate) was added in a 5 wt% ratio to the solution to make thermal curing possible. The solution was applied onto the phosphor layer in order to fill the voids between the phosphor needles, in order to become coating A. Curing was carried out by heating the layer at 120°C for 1 hour and at 90°C during 4 hours.
A second example (coating B) of a penetrating layer was prepared from 75 wt% Kion ML33/C33 of Kion Corporation USA, being a polysiloxazane with reactive groups for atmospheric moisture curing, and 25 wt% of a urethane acrylate mixture, consisting of 50 wt% ethyleneglycol-dimethacrylate, 40 wt% of a hexafunctional oligomer and 10% of a solved copolymerisate p(MMA-co-BMA).
The lacquer was diluted to a 10 wt% solution with 80 wt% methylethylketone and 20wt% methoxypropanol, enhancing the spreading of the applied layer and slowing the solvent evaporation process.
Curing was carried out after application of the solution onto the phosphor layer with voids at elevated temperature (60°C) and under the influence of atmospheric moisture.
The application of the solution was each carried out by means of the following application techniques: dip-coating, spray-coating and bar-coating. In this case no wiping step was required in order to remove the excess of said solution from said vapour deposited phosphor.
In a third example (coating C) 10 g of copolymerisate p(MMA-co-BMA) was solved in 60 g of a mixture of 4/3/1 Laromer TMPTA of BASF / poly(oxy-1,2-ethanediyl-hydro-(1-oxo-2-propenyloxy))-ether / 2-ethyl-2(hydroxymethyl)-1,3-propanediol, followed by adding 30 g of a hexafunctional urethaneacrylate-oligomer in order to provide a clear, colorless lacquer. Then 20 g of a siloxazane was added, together with 500 g of methyl ethylketone and 380 g of diethylketone, in order to become a clear low viscous solution with a viscosity of 5 mPas. As an initiator 6 g of Darocur 1173 was added. Curing of the applied solution was carried out by means of UV-radiation.
As a reference coating D, a diluted reactive urethane acrylate mixture was applied onto the phosphor needles by means of dipping, forming a coating of 8 μm thickness after solvent evaporation and UV-curing. The urethane acrylate oligomeric mixture consists of 45% ethanedioldiacrylate, 15 % MMA-co-BMA-copolymerisate and 34% Ebecryl 1290 from UCB, Belgium, completed with a 3% flow improvement additive and a 3% 2-hydroxy-2-methyl-1-phenyl-propan-1-one. As a dilution solvent use was made of methylisobutylketone.
The abrasion resistance of the applied coatings was evaluated with a Teledyne Taber 5130 Abraser with Calibrase CS10F elements, sandpaper P220 and a load of 250 g on each element; as described in ASTM D1044.

The mass loss of the layer (in milligrams) was analytically measured after 100 cycles.

The abrasion area was the same for all tests, as prescribed for the Teledyne Taber 5130 Abraser.

The Taber abrasion test was used as a technique, efficiently simulating the wear that may occur on phosphor panels in practical situations as a result of practical use in a market environment as a hospital. Appearance of wear may subsequently lead to transport problems in the scanning module and may even have negative impact on image quality. Results of this test have been summarised in Table 1 hereinafter.

Table 1

| Coating | ASTM D1044 test Mass loss | Applied Coating Thickness |
|---|---|---|
| No coating onto the phosphor needle layer | > 20 mg | none |
| Reference coating D | 4.0 mg | 8 µm |
| Coating A | 2.5 mg | 10 µm |
| Coating B | 1.0 mg | 6 µm |
| Coating C | 0.5 mg | 7 µm |

It has thus clearly been shown that, making use of a Teledyne Taber 5130 Abraser and with Calibrase CS10F elements, sandpaper P220 and a load of 250 g on each element as described in ASTM D1044, a mass loss of the surface layer of the screen of not more than 3 mg is found, when measured after 100 cycles, which is clearly indicative for the effectiveness of the protective layer applied to the binderless phosphor screen prepared according to the method of the present invention.

Having described in detail preferred embodiments of the current invention, it will now be apparent to those skilled in the art that numerous modifications can be made therein without departing from the scope of the invention as defined in the appending claims.

**Claims**

1.  A method for producing a binderless phosphor screen comprising the steps of :

    - depositing a photostimulable phosphor on a substrate forming a phosphor layer with phosphor needles and voids between them,
    - applying a solution of polymeric compounds selected from the group consisting of silazane and siloxazane type polymeric compounds, mixtures thereof and mixtures of said silazane or siloxazane type polymeric compounds with compatible polymeric compounds, on said vapour deposited phosphor as a surface layer,
    - optionally wiping the excess of said solution from said phosphor layer and
    - drying said phosphor screen.

2.  A method according to claim 1, wherein said photostimulable phosphor is a CsX:Eu stimulable phosphor, X being selected from the group consisting of Cl, Br and combinations thereof, deposited from a heatable container with said CsX:Eu phosphor, together with the substrate in a deposition chamber that is evacuated to at least $10^{-1}$ mbar.

3.  A method according to claim 1 or 2, wherein said step of depositing proceeds by a method selected from the group consisting of physical vapour deposition, chemical vapour deposition or atomisation technique, thereby forming a vapour deposited phosphor layer with needle-shaped phosphor crystals.

4.  A method according to any one of the claims 1 to 3, wherein an additional step of applying at least one colorant in said voids is performed before said step of applying a solution of the said polymeric compounds.

5.  A method according to any one of the claims 1 to 4, wherein, in said step of applying a solution of the said polymeric compounds on said vapour deposited phosphor, a solution of a polymer is used further comprising at least one colorant.

6.  A method according to claim 5, wherein an additional step of applying at least one colorant in said voids is performed before said step of applying a solution of the said polymeric compounds on said vapour deposited phosphor.

**7.** A method according to any one of claims 1 to 6, wherein said solution of compatible polymeric compounds is selected from the group consisting of vinyl resins comprising moieties derived from esters of acrylic acid in ethylacetate, vinyl resins comprising moieties derived from esters of methacrylic acid in ethylacetate, a thermoplastic rubber in a mixture of ethylacetate and toluene, urethanes or urethaneacrylates in ketones, melamine-resins in a mixture of ketones and ethylacetate, and diamine-hardened or isocyanate-hardened elastomers in ketones.

**8.** Method according to any one of the claims 1 to 7, wherein said voids are filled over a length of at least 5 μm.

**9.** Method according to any one of claims 1 to 8, wherein Taber abrasion tests applied to a surface layer of said binderless phosphor screen by making use of a Teledyne Taber 5130 Abraser and with Calibrase CS10F elements, sandpaper P220 and a load of 250 g on each element as described in ASTM D1044, provide a mass loss of said surface layer of not more than 3 mg when measured after 100 cycles.

**10.** Method according to any one of the claims 1 to 9, wherein said phosphor screen comprises a binderless phosphor layer of needle-shaped CsBr:Eu crystals.

**European Patent Office**

## EUROPEAN SEARCH REPORT

Application Number

EP 04 10 0671

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| D,A | EP 1 113 458 A (AGFA GEVAERT) 4 July 2001 (2001-07-04) * the whole document * ----- | 1-10 | G21K4/00 |
| D,A | EP 0 579 016 A (FUJI PHOTO FILM CO LTD) 19 January 1994 (1994-01-19) * claims * ----- | 1-10 | |
| D,A | EP 0 288 038 A (FUJI PHOTO FILM CO LTD) 26 October 1988 (1988-10-26) * claims * ----- | 1-10 | |
| D,A | US 5 459 114 A (KAYA HIROSHI ET AL) 17 October 1995 (1995-10-17) * claims * ----- | 1 | |
| | | | TECHNICAL FIELDS SEARCHED (Int.Cl.7) G21K |

The present search report has been drawn up for all claims

| Place of search | Date of completion of the search | Examiner |
|---|---|---|
| Munich | 6 July 2004 | Ludi, M |

EPO FORM 1503 03.82 (P04C01)

**ANNEX TO THE EUROPEAN SEARCH REPORT
ON EUROPEAN PATENT APPLICATION NO.**                    EP 04 10 0671

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2004

| Patent document cited in search report | | Publication date | Patent family member(s) | | Publication date |
|---|---|---|---|---|---|
| EP 1113458 | A | 04-07-2001 | EP | 1158540 A1 | 28-11-2001 |
| | | | EP | 1113458 A1 | 04-07-2001 |
| | | | JP | 2001249198 A | 14-09-2001 |
| | | | US | 2003091729 A1 | 15-05-2003 |
| | | | US | 2001007352 A1 | 12-07-2001 |
| EP 0579016 | A | 19-01-1994 | JP | 6075097 A | 18-03-1994 |
| | | | DE | 69323803 D1 | 15-04-1999 |
| | | | DE | 69323803 T2 | 07-10-1999 |
| | | | EP | 0579016 A1 | 19-01-1994 |
| | | | US | 5475229 A | 12-12-1995 |
| EP 0288038 | A | 26-10-1988 | JP | 63262600 A | 28-10-1988 |
| | | | DE | 3868119 D1 | 12-03-1992 |
| | | | EP | 0288038 A1 | 26-10-1988 |
| | | | US | 6031236 A | 29-02-2000 |
| US 5459114 | A | 17-10-1995 | EP | 0623571 A1 | 09-11-1994 |
| | | | WO | 9412448 A1 | 09-06-1994 |

EPO FORM P0459

For more details about this annex : see Official Journal of the European Patent Office, No. 12/82